# EUROPEAN PATENT APPLICATION

(11) **EP 4 700 880 A1**
(43) Date of publication of application: **25.02.2026**
(21) Application number: 25185967.4
(22) Date of filing: 27.06.2025
(51) Int. Cl.: H01M 10/04, H01M 50/107, H01M 50/152, H01M 50/169, H01M 50/342, H01M 50/474, H01M 50/477, H01M 50/531, H01M 50/545

(54) **SECONDARY BATTERY AND ELECTRONIC DEVICE**

(30) Priority: 21.08.2024 CN 202422039949 U
(71) Applicant: AESC Japan Ltd., Yokohama-Shi, Kanagawa 220-0012 (JP)
(72) Inventor: CHEN, Xiu, Jiangyin City, Wuxi City 214443 (CN)
(74) Representative: Becker, Eberhard

(57) **Abstract**

Disclosed are a secondary battery (100) and an electronic device (1000). The secondary battery (100) includes: a housing (110), having a peripheral sidewall (112) with one end defining an opening (113); an electrode assembly (130) accommodated in the housing (110); a cover assembly (140) covering the opening (113) and welded with the peripheral sidewall (112), having a protrusion (145) protruding toward the electrode assembly (130) for being inserted into the opening (113) and fitting against the peripheral sidewall (112); a first current collecting member (150) disposed between the cover assembly (140) and the electrode assembly (130), electrically connected to the cover assembly (140) and the electrode assembly (130), wherein, in a first direction (Z) from the electrode assembly (130) to the cover assembly (140), a spacing (119) at least partially used as a gas storage space is between the protrusion (145) and the first current collecting member (150).

## Description

### BACKGROUND

### Technical Field

The present disclosure relates to the field of battery technology, more specifically, relates to a secondary battery and an electronic device.

### Description of Related Art

In the industry of new energy power batteries, secondary batteries refer to rechargeable batteries, also known as renewable batteries or accumulators. Unlike primary batteries, secondary batteries may undergo multiple charge-discharge cycles through reverse charging for repeated use. One type of secondary battery is the columnar battery, which is valued for its advantages including high volumetric energy density, simple structure, easy for assembling, and convenient for standardization. In columnar batteries, current collecting members are typically positioned near the opening of the housing. Through these current collecting members, electrical connections are established between the housing of the columnar battery and the tab (such as the negative electrode tab) of the electrode assembly, thereby achieving electrical connection between the housing and the electrode assembly.

In existing columnar batteries, the remaining space between the cover assembly of the battery and the electrode assembly for storing gas is normally small, resulting in a limited amount of gas that can be accommodated in the gas storage space, causing undesirable changes in the internal pressure of the battery. For example, a high internal battery pressure is likely to be generated before the battery reaches extreme operating conditions. Therefore, the explosion-proof valve of the battery might open too early before the battery has reached thermal runaway conditions. In a situation like this, the efficiency of the battery is not fully utilized, and which is therefore undesirable.

### SUMMARY

In view of the problems existing in the related technology, the purpose of the present disclosure is to provide a secondary battery and an electronic device, which may at least increase the gas storage space inside the secondary battery to ensure smooth exhaust.

To achieve the above purpose, an embodiment of the present disclosure provides a secondary battery, which may include: a housing, having a peripheral sidewall, with one end of the peripheral sidewall defining an opening; an electrode assembly, accommodated in the housing; a cover assembly, covering the opening and welded to the peripheral sidewall, the cover assembly having a protrusion protruding toward the electrode assembly, the protrusion inserted into the opening and fitting against the peripheral sidewall; a first current collecting member, disposed between the cover assembly and the electrode assembly, and electrically connecting the cover assembly and the electrode assembly, wherein in a first direction from the electrode assembly to the cover assembly, there is a spacing between the protrusion and the first current collecting member, and the spacing is at least partially used as a gas storage space.

In some embodiments, a thickening part is disposed on the first current collecting member and directly contacts the cover assembly, and the thickening part is welded to the cover assembly.

In some embodiments, the first current collecting member has a flat part that directly contacts the first tab of the electrode assembly. The height from the top surface of the thickening part to the surface of the flat part facing away from the electrode assembly is H1, wherein 4mm≤H1≤13mm.

In some embodiments, the thickening part is disposed on the surface of the flat part facing away from the electrode assembly.

In some embodiments, the first current collecting member has a boss formed by stamping, protruding toward the cover assembly, and the thickening part is disposed on the boss.

In some embodiments, a pad is disposed between the cover assembly and the first current collecting member. The pad overlaps with the protrusion of the cover assembly and the edge part of the first current collecting member in the first direction, and the pad is located outside the projection area of the explosion-proof structure of the cover assembly in the first direction.

In some embodiments, the pad has a groove. The groove passes through the pad in a second direction perpendicular to the first direction, and the gap between the electrode assembly and the housing communicates with the groove.

In some embodiments, a through hole is disposed on the first current collecting member, and at least a part of the through hole is exposed by the pad.

In some embodiments, the first current collecting member is provided with a through hole extending longitudinally along a radius direction of the first current collecting member, wherein at least a part of the through hole increases in width from the inner side to the outer side of the first current collecting member along the radius direction.

An embodiment of the present disclosure further provides an electronic device, which may include the secondary battery described in any one of the above-mentioned embodiments.

The advantageous technical effects of the present disclosure include the following.

By setting a spacing between the protrusion of the cover assembly and the first current collecting member to serve as a gas storage space, the overall gas storage space inside the secondary battery is increased. In this way, it is possible to ensure smooth exhaust and avoid undesirable changes in the internal pressure of the battery due to a gas storage space that is too small, thereby avoiding depressurization before the battery reaches extreme operating conditions. The spacing between the protrusion and the first current collecting member may be generated by increasing the height of the thickening part. In order to avoid safety problems caused by battery vibration, a pad is disposed between the cover assembly and the first current collecting member. The pad may provide support between the first cover plate of the cover assembly and the first current collecting member and the electrode assembly, thereby avoiding defects in the electrode assembly due to battery vibration and enhancing battery safety. A groove may also be opened in the pad to provide an exhaust path in the radius direction, avoiding explosion of the housing caused by the inability to discharge gas at the peripheral sidewall of the housing. A through hole may also be disposed in the first current collecting member so that when the explosion-proof structure ruptures for pressure relief, gas and substances may pass through the through hole and push the explosion-proof structure to be discharged; and when the explosion-proof structure is not performing pressure relief, the through hole may also be used for discharging gas inside the battery.

### BRIEF DESCRIPTION OF THE DRAWINGS

In order to more clearly explain the technical solutions in the embodiments of the application or in the related art, a simple introduction will be given below to the drawings needed in the description of the embodiments or the related art. Clearly, the drawings described below are some embodiments of the application. For those skilled in the art, other drawings may be obtained based on these drawings without creative effort.
FIG. 1 is a front view of a secondary battery according to an embodiment of the present disclosure.
FIG. 2 is a cross-sectional view of the secondary battery taken along line X1-X1 in FIG. 1 according to an embodiment of the present disclosure.
FIG. 3 is a partially enlarged view of area A1 of the secondary battery in FIG. 2 according to an embodiment of the present disclosure.
FIG. 4 and FIG. 5 are isometric views of the first current collecting member and the thickening part in FIG. 3 according to different embodiments.
FIG. 6 is a partially enlarged view of area A1 of the secondary battery in FIG. 2 according to another embodiment of the present disclosure.
FIG. 7 is a perspective view of a pad according to an embodiment of the present disclosure.
FIG. 8A to FIG. 8C are schematic views of first current collecting members having through holes according to different embodiments.
FIG. 9 is a schematic view of an electronic device including the secondary battery according to an embodiment of the present disclosure.

### DESCRIPTION OF THE EMBODIMENTS

For a better understanding of the spirit of the embodiments of the present disclosure, the following further explains it in conjunction with some preferred embodiments of the present disclosure. It should be noted that, in the absence of conflict, the embodiments and features in the following embodiments may be combined with each other.

The embodiments of the present disclosure will be described in detail below. Throughout the specification of the present disclosure, the same or similar components and components with the same or similar functions are denoted by similar reference numerals. The embodiments related to the drawings described herein are illustrative, graphical, and provided for a basic understanding of the present disclosure. The embodiments of the present disclosure should not be interpreted as limitations on the present disclosure.

As used herein, the terms "substantially", "generally", "essentially" and "about" are used to describe and explain small variations. When used in conjunction with an event or circumstance, these terms may refer to examples where the event or circumstance occurs precisely as well as examples where the event or circumstance occurs very approximately.

In the specification, unless specifically specified or limited, relative terms such as: "central", "longitudinal", "lateral", "front", "rear", "right", "left", "internal", "external", "lower", "higher", "horizontal", "vertical", "above", "below", "upper", "lower", "top", "bottom" and their derivative terms (such as "horizontally", "downwardly", "upwardly", etc.) should be interpreted as referring to the direction described in the discussion or shown in the drawings. These relative terms are only used for ease of description and do not require that the present disclosure be constructed or operated in a specific direction.

For ease of description, "first", "second", "third", and so on may be used herein to distinguish different components of a figure or a series of figures. "First", "second", "third" and so on are not intended to describe the corresponding components.

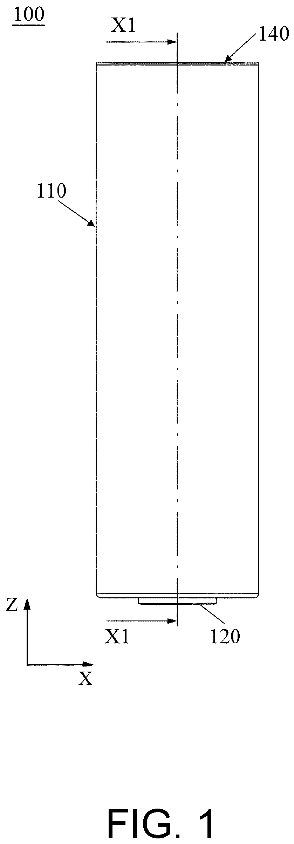

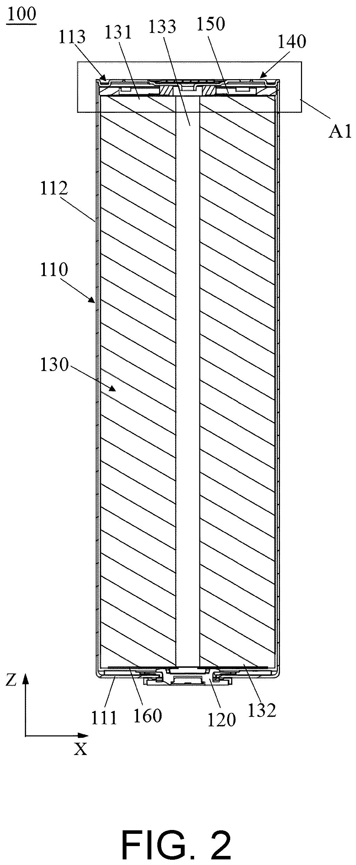

FIG. 1 is a front view of a secondary battery 100 according to an embodiment of the present disclosure. FIG. 2 is a cross-sectional view of the secondary battery 100 taken along line X1-X1 in FIG. 1 according to an embodiment of the present disclosure. In the embodiment, the secondary battery 100 is shown as a columnar battery as an example. In some embodiments, the secondary battery 100 may be a 4680 columnar battery (with diameter 46mm, height 80mm), or may be a 4695 columnar battery (with diameter 46mm, height 95mm), or may be a 46120 columnar battery (with diameter 46mm, height 120mm).

With reference to FIG. 1 and FIG. 2, the secondary battery 100 may include a housing 110, a terminal 120, an electrode assembly 130, a first current collecting member 150, a second current collecting member 160, and a cover assembly 140.

The housing 110 may specifically include an end wall 111 and a peripheral sidewall 112 surrounding the end wall 111. As long as a stable sealing and electrical connection relationship can be formed, the connection between the end wall 111 and the peripheral sidewall 112 may be implemented in various ways, for example, the connection may be formed by integral stamping, integral casting, or separate welding. The peripheral sidewall 112 can be in the form of a columnar enclosure surrounding or encircling along any other closed-loop contour that can be configured to match the end wall 111. In the embodiment, the outer edge of the end wall 111 is circular, and the peripheral sidewall 112 is columnarly surrounding the outer edge of the end wall 111. The housing 110 formed by the end wall 111 and the peripheral sidewall 112 forms an accommodating cavity for accommodating the electrode assembly 130, electrolyte (not shown), and other necessary battery components. Specifically, the diameter size of the housing 110 may be determined according to the specific dimensions of the electrode assembly 130, such as 18mm, 21mm, 46mm, etc. The material of the housing 110 may be selected from a variety of materials, such as copper, iron, aluminum, steel, aluminum alloy, etc. In order to prevent the housing 110 from rusting during long-term use, a layer of anti-rust material such as metallic nickel may also be plated on the surface of the housing 110.

The electrode assembly 130 is accommodated in the housing 110. The electrode assembly 130 is mainly formed by winding or stacking positive electrode sheets and negative electrode sheets, and usually a separator is provided between the positive electrode sheets and the negative electrode sheets. The positive electrode sheet includes a positive current collector and positive active substance, with the positive active substance coated on the surface of the positive current collector. The positive current collector includes a coating area coated with active substance and an uncoated area without coating the active substance, and the uncoated area forms a positive electrode tab of the electrode assembly 130 after winding. The negative electrode sheet includes a negative current collector and negative active substance, with the negative active substance coated on the surface of the negative current collector. The negative current collector includes a coating area coated with active substance and an uncoated area without coating the active substance, and the uncoated area forms a negative electrode tab of the electrode assembly 130 after winding. Taking a lithium-ion secondary battery as an example, the material of the positive current collector may be aluminium. The positive active substance layer includes positive active substance, and the positive active substance may be lithium cobalt oxide, lithium iron phosphate, ternary lithium, or lithium manganese oxide, etc. The material of the negative current collector may be copper. The negative active substance layer includes negative active substance, and the negative active substance may be carbon or silicon, etc. The material of the separator may be PP (polypropylene) or PE (polyethylene), etc. To provide protection and achieve insulation for the electrode assembly 130, an insulating film may also be used to wrap the outside of the electrode assembly 130. The insulating film may be synthesized from PP, PE, PET (polyethylene terephthalate), PVC (polyvinyl chloride), or other polymer materials.

A circular opening 113 may be formed at one end of the peripheral sidewall 112 facing away from the end wall 111. The electrode assembly 130 may include a first tab 131 facing the opening 113 and a second tab 132 facing the end wall 111. In the embodiment, the first tab 131 is a negative electrode tab, and one side of the opening 113 of the housing 110 is electrically connected with the first tab 131, thereby carrying negative charge, while the second tab 132 is a positive electrode tab, and the terminal 120 is electrically connected with the second tab 132 and carrying positive charge. However, in other embodiments, the second tab 132 may be a negative electrode tab, and the first tab 131 may be a positive electrode tab. The first current collecting member 150 is disposed at one end of the electrode assembly 130 facing the opening 113, and may be welded to the first tab 131. The second tab 132 may be electrically connected to the terminal 120 through the second current collecting member 160. In the embodiment where the secondary battery is a columnar battery, the electrode assembly 130 may have a center through hole 133, which may maintain more smooth communication between the spaces at both ends of the electrode assembly 130, and the center through hole 133 may be used as an exhaust path for discharging gas generated during the operation of the electrode assembly 130.

The terminal 120 may pass through the end wall 111, and is insulated from the end wall 111. The structural form of the terminal 120 may be any suitable form that can pass through the end wall 111 and electrically connect with the second tab 132 of the electrode assembly 130, for example, the cross-section may be circular, square, prismatic, or an irregular contour that can achieve stable conduction. One end of the terminal 120 facing the electrode assembly 130 passes through the end wall 111 and directly or indirectly electrically connects with the second tab 132. In the embodiment, the terminal 120 is indirectly electrically connected with the second tab 132 through the second current collecting member 160. One end of the terminal 120 facing the opening 113 is welded to the second current collecting member 160, and one side of the second current collecting member 160 facing away from the terminal 120 is welded to the second tab 132. One end of the terminal 120 facing away from the electrode assembly 130 is exposed to the outside of the housing 110 to form a corresponding electrode (such as a positive electrode), and the housing 110 forms another corresponding electrode (such as a negative electrode). The terminal 120 may be made of a conductive metal material. For example, the material of the terminal 120 may be aluminum (Al). The terminal 120 is electrically insulated from the housing 110. The electrical insulation between the terminal 120 and the end wall 111 of the housing 110 may be achieved in various methods. For example, insulation may be achieved by placing an insulating washer between the terminal 120 and the end wall 111.

The material of the first current collecting member 150 and the second current collecting member 160 may be selected according to the polarity of the tabs connected to them. For example, if the second current collecting member 160 is connected to the positive electrode tab, then aluminum metal may be selected for the second current collecting member 160, and copper metal may be selected for the material of the first current collecting member 150 connected to the negative electrode tab. The shape and structure of the second current collecting member 160 and the first current collecting member 150 are also not limited, as long as they can achieve stable and reliable electrical connection.

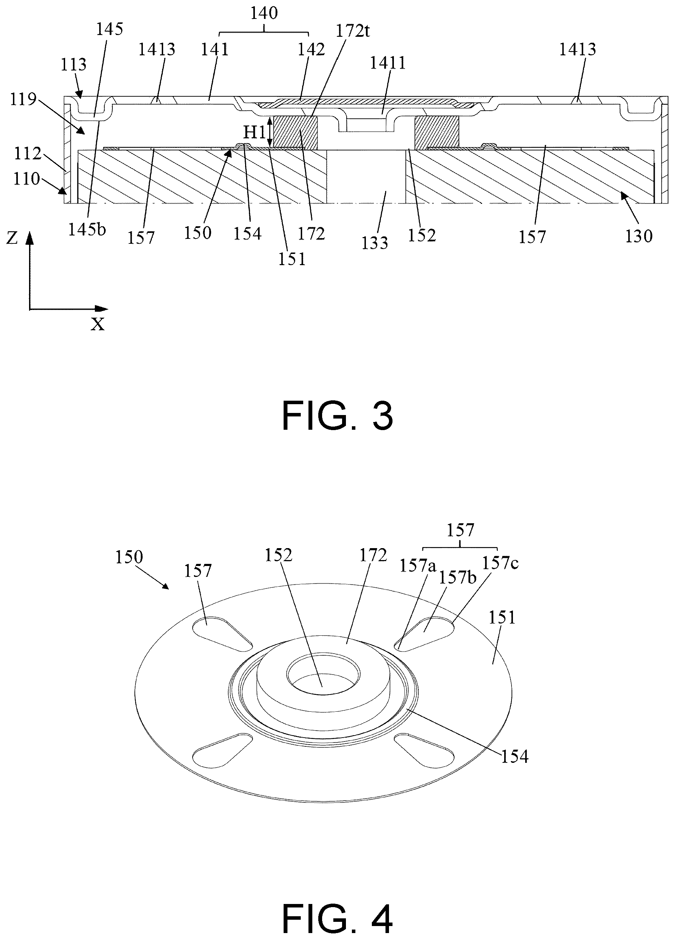

The cover assembly 140 seals and blocks the opening 113. FIG. 3 is a partial enlarged view of area A1 of the secondary battery of FIG. 2 according to an embodiment of the present disclosure. Specifically, referring to FIG. 3, the cover assembly 140 may include a first cover plate 141 and a second cover plate 142, wherein the outer edge shape of the first cover plate 141 corresponds to the shape of the opening 113, and the outer edge of the first cover plate 141 is welded to the peripheral sidewall 112 and seals the opening 113. The method of welding the outer edge of the first cover plate 141 and the peripheral sidewall 112 may be any welding method that can achieve sealing at the welding position.

The first cover plate 141 may include a through hole 1411, and the through hole 1411 passes the first cover plate 141 along the thickness direction of the first cover plate 141. The shape of the through hole 1411 is not limited and may be circular, elliptical, or other types with closed contours. The second cover plate 142 is fixed on the first cover plate 141 and covers the through hole 1411. As long as the through hole 1411 can be effectively sealed and blocked, there are various ways for the second cover plate 142 to cover the through hole 1411, for example, the second cover plate 142 may be welded to the first cover plate 141 and seals the through hole 1411. The shape of the second cover plate 142 may correspond to the through hole 1411, for example, in the case where the through hole 1411 is circular, the second cover plate 142 is also circular, and in the case where the through hole 1411 is square, the second cover plate 142 is also square. The shape of the second cover plate 142 may not correspond to the shape of the through hole, for example, in the case where the through hole 1411 is circular, the second cover plate 142 may be square that can cover the through hole, and in the case where the through hole 1411 is square, the second cover plate 142 may be circular that can cover the through hole. Electrolyte may be injected into the housing 110 through the through hole 1411. In addition, the first cover plate 141 may be directly or indirectly electrically connected to the first current collecting member 150 through any appropriate method, so that the housing 110 forms a corresponding electrode (such as a negative electrode).

In the embodiment, the secondary battery 100 is a columnar battery. The peripheral sidewall 112 of the housing 110 forms a columnar enclosure. The outer edge of the first cover plate 141 is circular, and the outer edge of the first current collecting member 150 is also circular. An opening 152 may be formed in the first current collecting member 150, and the opening 152 may be coaxially disposed with the center through hole 133 of the first cover plate 141 and/or the electrode assembly 130.

An explosion-proof structure 1413 may also be disposed on the first cover plate 141. The explosion-proof structure 1413 is used to at least partially open when the internal pressure in the housing 110 reaches a specific level to release the pressure inside the housing 110. There is no limitation on the type of explosion-proof structure 1413. In an embodiment shown in FIG. 3, the explosion-proof structure 1413 includes a notch disposed on the second cover plate 142, and the notch is disposed on one side of the second cover plate 142 facing the electrode assembly 130. The notch may be an annular structure. It should be noted that the annular structure does not limit the notch to be circular or elliptical. Of course, in other embodiments, the notch may also be other structures, as long as the notch can open when the pressure is greater than a predetermined threshold. The position of the explosion-proof structure 1413 constructed as a notch is an area of the first cover plate 141 with relatively low strength. When the pressure inside the housing 110 exceeds a specific threshold, the fragile notch will rupture, and in the circumstances, the pressure inside the housing 110 may be discharged from the rupture, thereby preventing the secondary battery from exploding from the housing.

The first cover plate 141 may also include a protrusion 145 that matches the opening 113, with the protrusion 145 protruding toward the electrode assembly 130. The protrusion 145 is inserted into the opening 113 and fits against the peripheral sidewall 112, so that the outer edge of the protrusion 145 cooperates with the peripheral sidewall 112. The protrusion 145 is used for assembly guidance between the first cover plate 141 and the opening 113, as well as the cooperation between the peripheral sidewall 112 of the housing 110 and the first cover plate 141, which may enable quick circumferential positioning between the first cover plate 141 and the opening 113, thereby improving the efficiency and positional accuracy of welding between the first cover plate 141 and the peripheral sidewall 112. The protrusion 145 may integrally and continuously enclose the outer edge of the first cover plate 141, or multiple independent protrusions 145 may be disposed around the through hole 1411. In an embodiment, the protrusion 145 may be used to block the laser when the first cover plate 141 and the peripheral sidewall 112 are welded. The method of connecting the protrusion 145 and the first cover plate 141 is not limited; the connection may be formed by integrally stamping, or the protrusion 145 may be formed by machining on the first cover plate 141 by removing material. In existing secondary batteries, the protrusion 145 is normally abutted against or welded to the first current collecting member 150. However, such method causes the remaining space, which is between the cover assembly 140 and the electrode assembly 130 for gas storage, to be small.

In some embodiments of the present disclosure, in the first direction Z from the electrode assembly 130 to the cover assembly 140 (in the embodiment, the first direction Z is parallel to the height direction of the secondary battery 100), there is a spacing 119 between the protrusion 145 and the first current collecting member 150, and the space corresponding to the spacing 119 may be at least partially used as a gas storage space. In the technical solution, by setting a spacing 119 between the protrusion 145 of the cover assembly 140 and the first current collecting member 150 to be used as a gas storage space, the overall gas storage space inside the secondary battery is increased to ensure smooth exhaust, avoiding undesirable pressure changes inside the battery due to a gas storage space that is too small, and preventing the battery from depressurizing before reaching extreme operating conditions.

Continuing to refer to FIG. 3, a thickening part 172 is disposed on the first current collecting member 150, which is welded to the cover assembly 140. In the first direction Z, the top surface 172t of the thickening part 172 is higher than the bottom surface 145b of the protrusion 145. By setting the thickening part 172, the purpose of electrically connecting the first current collecting member 150 with the cover assembly 140 and the housing 110 is achieved. In the embodiment, by increasing the height of the thickening part 172, a spacing 119 may be generated between the protrusion 145 and the first current collecting member 150, thereby increasing the gas storage space inside the secondary battery.

In some embodiments, the first current collecting member 150 may have a flat part 151 that directly contacts the first tab 131 of the electrode assembly 130, and the distance from the top surface 172t of the thickening part 172 to the surface of the flat part 151 that faces away from the electrode assembly 130 defines the height H1. The height H1 of the thickening part 172 may be 4mm≤H1≤13mm. The height of the spacing 119 in the first direction Z may be adjusted through the height H1 of the thickening part 172, ensuring that the spacing 119 with an appropriate height is generated between the protrusion 145 and the first current collecting member 150, thereby increasing the overall gas storage space inside the secondary battery.

FIG. 4 is an isometric view of the first current collecting member 150 and the thickening part 172 in FIG. 3 according to an embodiment. Referring to FIG. 3 and FIG. 4 together, in some embodiments, the thickening part 172 is disposed on the surface of the flat part 151 that faces away from the electrode assembly 130. In the embodiment, the thickening part 172 is located on the flat part 151 around the opening 152 of the first current collecting member 150, and a part of the bottom of the thickening part 172 may be inserted into the opening 152. The thickening part 172 may be formed by machining and disposed on the first current collecting member 150.

In the embodiment, the first current collecting member 150 may also include a buffer part 154 that protrudes toward the cover assembly 140 relative to the flat part 151. The buffer part 154 is, for example, an annular shape surrounding the opening 152. The buffer part 154 may serve as a stress buffer for the first current collecting member 150, reducing deformation of the first current collecting member 150, and the buffer part 154 may also increase the structural strength of the first current collecting member 150 itself, thereby increasing the service life of the first current collecting member 150.

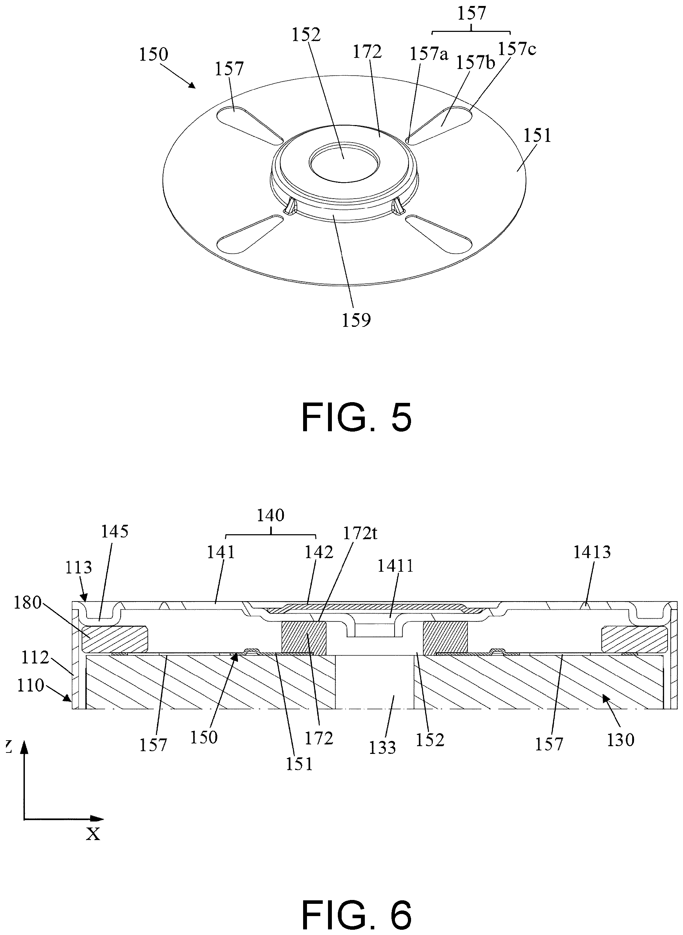

FIG. 5 is an isometric view of the first current collecting member 150 and the thickening part 172 according to another embodiment. In the embodiment shown in FIG. 5, the first current collecting member 150 may have a boss 159 that is formed by stamping and protrudes toward the cover assembly 140 (see FIG. 3). The boss 159 formed by stamping is a hollow structure. The thickening part 172 may be disposed on the boss 159. The boss 159 may also be formed using a mold. Forming the boss 159 by stamping or molding may be more suitable for mass production. Because the boss 159 is a hollow structure, it is possible to reduce use of material, which is more favourable for weight reduction of the first current collecting member 150.

Referring back to FIG. 3, by configuring the spacing 119 to increase the gas storage space, gaps exist between other positions and the cover assembly 140 except for the position of the thickening part 172 of the first current collecting member 150. Such gaps may, when the battery vibrates, cause the electrode assembly 130 to also vibrate within the housing 110 and collide with other structures, leading to defects in the electrode assembly 130 (such as internal short circuits), which reduces safety performance of battery.

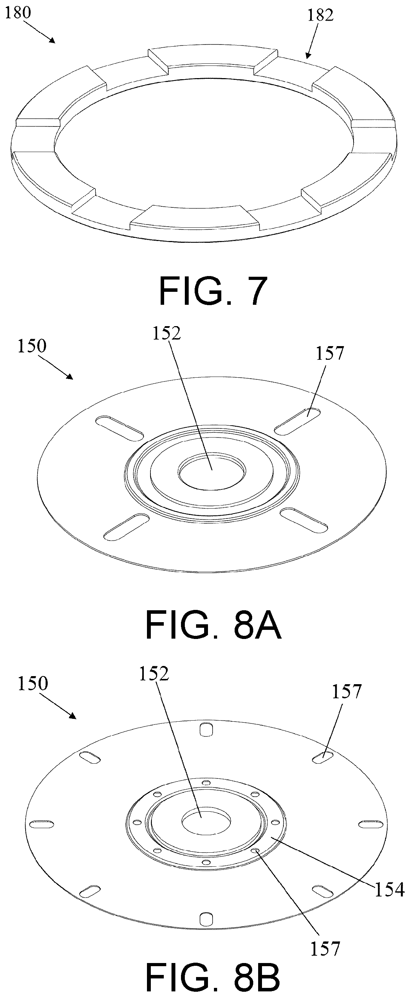

To avoid the above problems, as shown in FIG. 6, in some embodiments, a pad 180 may be disposed between the cover assembly 140 and the first current collecting member 150. In some embodiments, the pad 180 may be a closed ring extending along the peripheral sidewall 112 of the housing 110. In the embodiment where the secondary battery 100 is a columnar battery, referring to FIG. 6 and FIG. 7 together, the pad 180 may be a circular ring shape, and overlaps with the outer edge of the first current collecting member 150 in the first direction Z.

The pad 180 may overlap with the protrusion 145 of the cover assembly 140 in the first direction Z, and the pad 180 also overlaps with the edge part of the first current collecting member 150 in the first direction Z. In the way, the position of the pad 180 may be fixed in the first direction Z and in the second direction X perpendicular to the first direction Z. The pad 180 may provide support between the first cover plate 141 of the cover assembly 140 and the first current collecting member 150 and the electrode assembly 130, so that when the battery vibrates, the electrode assembly 130 will not vibrate within the housing 110 and will not collide with other structures, thereby avoiding defects in the electrode assembly 130 caused by battery vibration, enhancing safety performance of battery. In addition, because the pad 180 overlaps with the protrusion 145, the dimension of the pad 180 may match the dimension of the housing 110, so that the pad 180 may be limited by cooperating with the peripheral sidewall 112 of the housing 110, making assembly convenient. Moreover, it is possible to prevent the outer diameter of the pad 180 from being too small, as a small outer diameter of the pad 180 would cause the pad 180 to shake within the housing 110. Furthermore, the pad 180 is located outside the projection area of the explosion-proof structure 1413 of the cover assembly 140 in the first direction Z. Such position configuration may avoid interference between the pad 180 and the explosion-proof structure 1413, thus not affecting the pressure relief of the internal pressure of the battery.

In some embodiments, the material of the pad 180 may be the same as the material of the first current collecting member 150, or the material of the pad 180 may be the same as the material of the first cover plate 141 pf the cover assembly 140, or the second cover plate 142, or the housing 110. In some embodiments, the material of the pad 180 may be high-temperature resistant and electrolyte-resistant plastic parts, for example, the material of the pad 180 may be LCP (liquid crystal polymer).

In addition, the pad 180 may have at least one groove 182. The groove 182 passes through the pad 180 in the second direction X (i.e., the radius direction of the secondary battery) perpendicular to the first direction Z. There may be a gap between the pad 180 and the peripheral sidewall 112 of the housing 110. The groove 182 may connect the gap between the electrode assembly 130 and the housing 110 to the groove 182.

After the pad 180 is disposed, the pad 180 will affect the exhaust from battery, for example, the pad 180 may block the exhaust path between the gap between the electrode assembly 130 and the housing 110 and the gas storage space, causing it difficult for the gas in the gap between the electrode assembly 130 and the housing 110 to enter the gas storage space, and the gas in the gap that cannot be discharged might cause the housing to explode (barrel explosion). Accordingly, an embodiment of the present disclosure provides an exhaust path in the radius direction by opening a groove 182 in the pad 180, for example, to allow the gas in the gap between the electrode assembly 130 and the housing 110 to enter the gas storage space on one side of the explosion-proof structure 1413 of the cover assembly 140. In this way, it is possible to prevent the explosion of the housing caused by the inability to discharge the gas at the peripheral sidewall 112 of the housing 110.

In some embodiments, referring to FIG. 3 to FIG. 6, at least one through hole 157 may be disposed on the first current collecting member 150. At least a part of the through hole 157 may be exposed by the pad 180, that is, the pad 180 is not located above at least a part of the through hole 157, which enables the gas generated by the electrode assembly 130 during operation to be discharged from the through hole 157 to the gas storage space between the cover assembly 140 and the electrode assembly 130, thereby providing an exhaust path in the first direction Z.

On the other hand, since the projection area of the explosion-proof structure 1413 in the first direction Z is normally smaller than the projection area of the first current collecting member 150, and since the first current collecting member 150 is welded to the cover assembly 140 through the thickening part 172, when the explosion-proof structure 1413 ruptures for pressure relief, it may cause the first current collecting member 150 to hold the cover assembly 140, making the cover assembly 140 unable to be discharged. Moreover, when the explosion-proof structure 1413 ruptures for pressure relief, it is necessary to use the thrust of gas and substances to push out the explosion-proof structure 1413, but in fact some gas and substances will be blocked by the first current collecting member 150, which also makes the cover assembly 140 unable to be discharged. An embodiment of the present disclosure, by providing a through hole 157 in the first current collecting member 150, may enable gas and substances to pass through the through hole 157 and push the explosion-proof structure 1413 to be discharged when the explosion-proof structure 1413 ruptures for pressure relief. Additionally, when the explosion-proof structure 1413 does not perform pressure relief, the through hole 157 may also be used for discharging gas inside the battery.

The through hole 157 may be of any appropriate shape and at any position. For example, referring to FIG. 4 and FIG. 5, in some embodiments, the through hole 157 extends longitudinally along the radius direction of the first current collecting member 150, and at least a part of the through hole 157 increases in width radially from the inner side to the outer side of the first current collecting member 150. In an example, the through hole 157 has a teardrop shape as shown in FIG. 4 and FIG. 5, and multiple through holes 157 may be spaced apart around the opening 152. In a top view, the two end parts 157a and 157c of the through hole 157 may have arcuate edges, and in a direction from the inner side to the outer side of the first current collecting member 150, the width of the middle part 157b of the through hole 157 connecting between the two end parts 157a and 157c gradually increases. Moreover, the dimension of the end part 157c located on the outer side is larger than the dimension of the end part 157a. Combining FIG. 3 with FIG. 5, the through hole 157 located on the outer circumference of the electrode assembly 130 has a wider width. At the outer circumference of the electrode assembly 130, since the perimeter of each turn of electrode sheet is longer, and more gas will be generated between the electrode sheets, by configuring the through hole 157 on the outer circumference of the electrode assembly 130 to have a wider width, the area for exhaust at the outer circumference is larger, thereby more reasonably providing an exhaust path for the electrode assembly. It should be understood that the through hole 157 may also have other appropriate shapes, as long as at least a part of the through hole 157 increases in width from the inner side to the outer side, which may provide a larger exhaust area on the outer circumference of the electrode assembly.

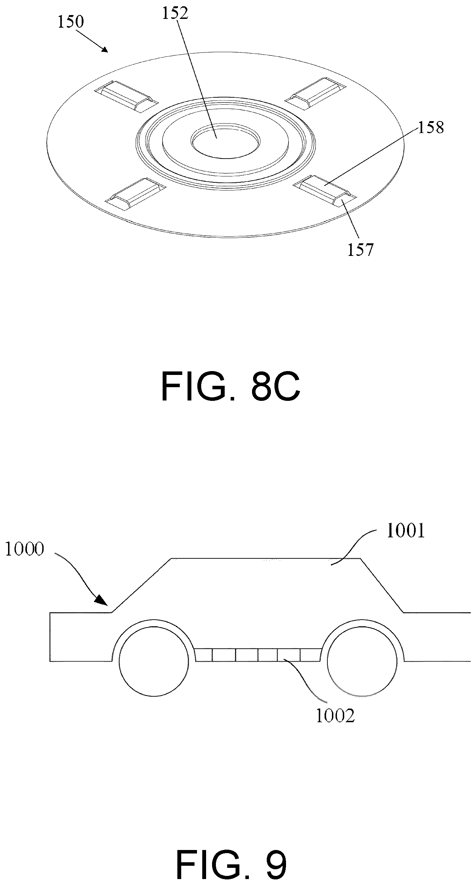

In another example, the through hole 157 may be an oval shape, as shown in FIG. 8A, the two ends of the through hole 157 may be arcuate, and in the direction from the inner side to the outer side of the first current collecting member 150, the width of the middle part between the two ends of the through hole 157 remains unchanged. Multiple through holes 157 may be spaced apart around the opening 152. Each through hole 157 may extend longitudinally in the direction from the inner side to the outer side of the first current collecting member 150. In another example, the through hole 157 may be opened at the periphery of the first current collecting member 150 and on the buffer part 154, as shown in FIG. 8B, the through hole 157 may be circular or oval in shape. In an example, the through hole 157 is located below the bridge structure 158, as shown in FIG. 8C, the bridge structure 158 may be formed on the first current collecting member 150 through stamping.

Referring to FIG. 9, an embodiment of the present disclosure also provides a battery assembly 1002, including the secondary battery 100 according to any one of the above embodiments, and the battery assembly 1002 may have the advantageous effects described above regarding the secondary battery 100.

An embodiment of the present disclosure also provides an electronic device 1000. The electronic device 1000 includes the battery assembly 1002 described above. For ease of explanation, the following embodiment takes the electronic device 1000 as a vehicle as an example. The battery assembly 1002 is disposed inside the vehicle, and the battery assembly 1002 may be disposed at the bottom or head or tail of the car body 1001. The battery assembly 1002 may be used for power supply of the vehicle, for example, the battery assembly 1002 may serve as the operating power source of the vehicle. The operating part of the electronic device 1000 is electrically connected with the battery assembly 1002 to obtain power support. The vehicle may be a gasoline vehicle, a gas vehicle or a new energy vehicle, the new energy vehicle may be a pure electric vehicle, a hybrid vehicle or a range-extended vehicle, etc., but is not limited thereto. The operating part is the car body, the battery assembly 1002 is disposed at the bottom of the car body, and provides power support for the operation of the vehicle or the operation of electrical components in the vehicle.

In some other embodiments, the electronic device 1000 may also be a mobile phone, a portable device, a laptop computer, a ship, a spacecraft, an electric toy and a power tool, etc. Spacecraft includes aircraft, rockets, space shuttles and spaceships, etc. The operating part may obtain power from the battery assembly 1002, and may be unit components that perform corresponding operations, such as the fan blade rotation unit of a fan, the vacuum operating unit of a vacuum cleaner, etc. Electric toys include fixed or mobile electric toys, such as game consoles, electric car toys, electric ship toys and electric aircraft toys, etc. Power tools include metal cutting power tools, grinding power tools, assembly power tools and railway power tools, such as electric drills, electric grinders, electric wrenches, electric screwdrivers, electric hammers, impact drills, concrete vibrators and electric planers, etc. The embodiments of the present disclosure do not impose special restrictions on the above electronic device 1000.

In summary, in the secondary battery 100 of the present disclosure, by setting a spacing 119 between the protrusion 145 of the cover assembly 140 and the first current collecting member 150 to serve as a gas storage space, the overall gas storage space inside the secondary battery is increased, which may ensure smooth exhaust, avoid undesired changes in internal pressure of battery due to a gas storage space that is too small, and avoid pressure relief before the battery reaches extreme operating conditions. The spacing 119 between the protrusion 145 and the first current collecting member 150 may be generated by increasing the height of the thickening part 172. Furthermore, to avoid safety problems caused by battery vibration, a pad 180 is disposed between the cover assembly 140 and the first current collecting member 150. The pad 180 may provide support between the first cover plate 141 of the cover assembly 140 and the first current collecting member 150 and the electrode assembly 130, thereby avoiding defects in the electrode assembly 130 due to battery vibration, thus enhancing safety performance of battery. A groove 182 may also be opened in the pad 180 to provide an exhaust path in the radial direction, avoiding explosion of the housing 110 caused by gas at the peripheral sidewall 112 of the housing 110 that cannot be discharged. A through hole 157 may also be disposed in the first current collecting member 150, so that when the explosion-proof structure 1413 ruptures for pressure relief, gas and substances may push the explosion-proof structure 1413 to be discharged through the through hole 157; and when the explosion-proof structure 1413 is not performing pressure relief, the through hole 157 may also be used for discharging gas inside the battery.

## Claims

1. A secondary battery (100), comprising:
a housing (110), having a peripheral sidewall (112), with one end of the peripheral sidewall (112) defining an opening (113);
an electrode assembly (130), accommodated in the housing (110);
a cover assembly (140), covering the opening (113) and welded to the peripheral sidewall (112), the cover assembly (140) having a protrusion (145) protruding toward the electrode assembly (130), the protrusion (145) inserted into the opening (113) and fitting against the peripheral sidewall (112);
a first current collecting member (150), disposed between the cover assembly (140) and the electrode assembly (130), and electrically connecting the cover assembly (140) and the electrode assembly (130);
wherein in a first direction (Z) from the electrode assembly (130) to the cover assembly (140), there is a spacing (119) between the protrusion (145) and the first current collecting member (150), and the spacing (119) is at least partially used as a gas storage space.

2. The secondary battery (100) according to claim 1, wherein a thickening part (172) is disposed on the first current collecting member (150), and the thickening part (172) is welded to the cover assembly (140).

3. The secondary battery (100) according to claim 1 or 2, wherein the first current collecting member (150) has a flat part (151) that directly contacts the electrode assembly (130), a height from a top surface of the thickening part (172) to a surface of the flat part (151) facing away from the electrode assembly (130) is H1, wherein 4mm≤H1≤13mm.

4. The secondary battery (100) according to any one of claims 1 to 3, wherein the thickening part (172) is disposed on a surface of the flat part (151) facing away from the electrode assembly (130).

5. The secondary battery (100) according to any one of claims 1 to 4, wherein the first current collecting member (150) has a boss (159) formed by stamping, protruding toward the cover assembly (140), and the thickening part (172) is disposed on the boss (159).

6. The secondary battery (100) according to any one of claims 1 to 5, wherein a pad (180) is disposed between the cover assembly (140) and the first current collecting member (150), the pad (180) overlaps with the protrusion (145) of the cover assembly (140) and an edge part of the first current collecting member (150) in the first direction (Z), and the pad (180) is located outside a projection area of an explosion-proof structure (1413) of the cover assembly (140) in the first direction (Z).

7. The secondary battery (100) according to any one of claims 1 to 6, wherein the pad (180) has a groove (182), the groove (182) passes through the pad (180) in a second direction (X) perpendicular to the first direction (Z), and a gap between the electrode assembly (130) and the housing (110) communicates with the groove (182).

8. The secondary battery (100) according to any one of claims 1 to 7, wherein a through hole (157) is disposed on the first current collecting member (150), and at least a part of the through hole (157) is exposed by the pad (180).

9. The secondary battery (100) according to any one of claims 1 to 8, wherein the first current collecting member (150) is provided with a through hole (157) extending longitudinally along a radius direction of the first current collecting member (150), wherein at least a part of the through hole (157) increases in width from an inner side to an outer side of the first current collecting member (150) along the radius direction.

10. An electronic device (1000), comprising the secondary battery (100) according to any one of claims 1 to 9.
